(19) Europäisches Patentamt / European Patent Office / Office européen des brevets

(11) **EP 3 845 870 B1**

(12) **FASCICULE DE BREVET EUROPEEN**

(45) Date de publication et mention de la délivrance du brevet:
**25.12.2024 Bulletin 2024/52**

(21) Numéro de dépôt: **21150182.0**

(22) Date de dépôt: **05.01.2021**

(51) Classification Internationale des Brevets (IPC):
***G01F 23/284*** (2006.01)

(52) Classification Coopérative des Brevets (CPC):
**G01F 23/284**

(54) **CAPTEUR DE NIVEAU**

FÜLLSTANDSENSOR

LEVEL SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.01.2020 FR 2000051**

(43) Date de publication de la demande:
**07.07.2021 Bulletin 2021/27**

(73) Titulaire: **Ijinus**
**29300 Mellac (FR)**

(72) Inventeurs:
- **LE STRAT, Olivier**
  **29000 Quimper (FR)**
- **LE GAC, Arnaud**
  **29380 Le Trévoux (FR)**
- **HENO, Sylvain**
  **56300 Saint-Thuriau (FR)**
- **ZUG, Mathieu**
  **44170 Vay (FR)**

(74) Mandataire: **Jacobacci Coralis Harle**
**32, rue de l'Arcade**
**75008 Paris (FR)**

(56) Documents cités:
WO-A1-2019/001817     CN-A- 108 225 482
GB-A- 2 135 150          JP-A- 2010 002 350
US-A- 6 078 280          US-A1- 2006 000 275
US-A1- 2010 031 753    US-A1- 2019 316 951

- "Handbook of Antenna Technologies", 1 January 2015, SPRINGER SINGAPORE, Singapore, ISBN: 978-981-4560-75-7, article CARLOS A. FERNANDES ET AL: "Dielectric Lens Antennas", pages: 1 - 54, XP055731784, DOI: 10.1007/978-981-4560-75-7_40-1

## Description

### Domaine technique de l'invention

La présente invention concerne un capteur de niveau. Elle s'applique, en particulier, à la technologie des radars hyperfréquences.

Un radar hyperfréquence est un dispositif qui permet de mesurer une distance entre le dispositif et un obstacle. Pour cela un émetteur envoie des ondes électromagnétiques sur un obstacle. Ces ondes se réfléchissent sur l'obstacle pour revenir sur un récepteur.

La bande fréquence est comprise entre 300Mhz et 300Ghz, soit des longueurs d'onde dans l'air ou dans le vide comprises entre 1m et 1mm.

### Technique antérieure

Les documents US2019/316951 et CN108225482 représentent un exemple d'état de la technique avec un capteur de niveau pour la mesure d'une distance entre un dispositif émetteur-récepteur et une cible. Toutefois, ces documents ont besoin d'une grande quantité d'énergie pour fonctionner et ne permettent pas d'améliorer de façon significative la fiabilité des mesures.

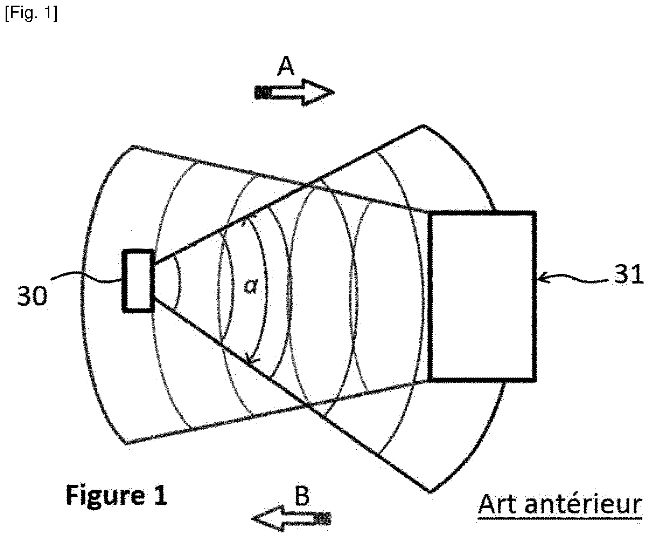

Un exemple de réalisation de l'art antérieur d'un dispositif émetteur-récepteur qui permet de mesurer une distance entre le dispositif et un obstacle est représenté sur la figure 1.

La figure 1 représente un schéma de principe avec d'un côté un dispositif émetteur-récepteur, noté 30, et de l'autre côté une cible, noté 31.

Le dispositif émetteur-récepteur 30 est en mode émission et envoie des ondes électromagnétiques avec modulation de la fréquence à une vitesse proche de celle de la lumière selon un angle $\alpha$. La flèche A indique la direction et le sens des ondes émises. Quand les ondes vont entrer en contact avec la cible 31 à mesurer elles vont plus ou moins se réfléchir sur cette cible 31 à mesurer en fonction de la permittivité cette matière. La flèche B indique la direction et le sens des ondes réfléchies.

Suivant la permittivité de la matière, les ondes vont revenir jusqu'au dispositif émetteur-récepteur 30 en mode réception avec une amplitude de calculer la distance entre le dispositif émetteur-récepteur 30 et la cible 31 à mesurer

Dans cette configuration, le dispositif émetteur-récepteur 30 a besoin d'une grande quantité d'énergie pour fonctionner car certaines ondes émises ne sont pas réfléchies vers le dispositif émetteur-récepteur 30.

### Présentation de l'invention

La présente invention vise à remédier à ces inconvénients avec une approche totalement novatrice.

A cet effet, la présente invention vise un capteur de niveau pour la mesure d'une distance entre un dispositif émetteur-récepteur et une cible, le dispositif émetteur-récepteur possède un mode d'émission d'ondes électromagnétiques selon un angle $\alpha$ et un mode réception d'ondes électromagnétiques, appelé écho, remarquable en ce qu'il comporte :

- une lentille positionnée entre le dispositif émetteur-récepteur et la cible selon une distance, ladite lentille déviant les ondes électromagnétiques du dispositif émetteur-récepteur selon l'angle $\alpha$ pour changer l'angle des ondes électromagnétiques selon un angle $\beta$ ;
- un élément de variation de la distance entre la lentille et le dispositif émetteur-récepteur ;
- une carte électronique radar prévue pour commander le dispositif émetteur-récepteur pour l'envoie d'ondes électromagnétiques et le traitement de l'écho reçu et le calcul d'une distance avec la cible, ledit calcul d'une distance entre l'émetteur-récepteur et la cible est effectué à partir de la vitesse de propagation de l'onde dans son milieu, la fréquence des ondes électromagnétiques et du temps de réponse entre le mode d'émission et le mode de réception ;
- la carte électronique radar est configurée avec un écho de référence et adapte l'amplitude des ondes électromagnétiques émises, avec la réalisation de tirs successifs et de comparaison entre les échos des tirs successifs et celui de référence ;
- une carte de communication entre le capteur de niveau et un terminal pour transmettre l'information du calcul de la distance provenant de la carte électronique ;
- une batterie pour alimenter les différents éléments du capteur de niveau.

Grâce à son alimentation intégrée, le capteur de niveau est placé dans des endroits sans réseau d'électricité.

De plus sa taille compacte permet aussi de le placer dans des endroits restreints.

Selon une variante, la carte électronique radar et carte de communication sont sur une seule et même carte électronique qui remplit les deux fonctions.

Selon un exemple de réalisation, le système utilise un radar pulsé ou radar pulsé cohérent.

Selon un autre exemple de réalisation, le système utilise le principe du FMCW (acronyme de Frequency-Modulated Continuous-Wave en terminologie anglophone pour onde continue modulée en fréquence en français) pour déterminer la distance entre le dispositif émetteur-récepteur et la cible. La carte électronique pour le traitement des ondes électromagnétiques est un micro-processeur qui contrôle l'émetteur-récepteur. Un convertisseur numérique-analogique transforme le code de contrôle en un signal analogique de tension. Un générateur spécial VCO (pour Voltage Controlled Oscillar en terminologie anglophone pour oscillateur à tension contrôlée) de fréquence radio génère un signal selon une fréquence proportionnelle au signal analogique de tension. Un filtre de bande passante est utilisé pour éliminer les pointes et les harmoniques afin de ne laisser que la fréquence programmée. Le signal est ensuite envoyé dans un coupleur qui va envoyer une partie du signal vers un mélangeur et l'autre partie du signal vers un amplificateur de puissance. L'amplificateur de puissance va alors augmenter l'intensité de l'onde transmise à la puissance désirée. Une fois l'onde amplifiée, l'onde est émise et envoyée sur la cible par l'intermédiaire de l'antenne de transmission. Une fois que l'onde s'est réfléchie sur la cible, elle est captée par l'antenne de réception. L'antenne de réception convertit alors le signal électromagnétique de retour en une tension de radiofréquence. Les signaux de retour sont extrêmement faibles. Ils sont alors amplifiés par un amplificateur à faible bruit. Les signaux amplifiés sont alors transmis au mélangeur. Le mélangeur multiplie les signaux émis et reçu, il produit à sa sortie un signal dont la fréquence est la différence entre celle du signal émis et celle du signal reçu à un instant t. On applique ensuite un filtre passe-bas sur le signal pour filtrer les fréquences hautes parasites. Le signal est ensuite amplifié à l'aide d'un amplificateur et est transmis à un convertisseur analogique-numérique. Le traitement de signal en sortie donne la fréquence entre le signal reçu et émis.

L'émission et la réception se font simultanément. Le signal émis est modulé linéairement en fréquence (rampe de fréquence). La mesure de la différence de fréquence entre émission et réception permet le calcul d'un temps de propagation (allé -retour) du signal émis et par conséquent de la distance (allé -retour) entre émetteur et cible.

En appliquant une fonction inverse sur la fréquence du signal en sortie de mélangeur, on obtient le temps qu'a mis une onde pour se propager jusqu'à la cible et pour revenir. Connaissant la vitesse de propagation de l'onde, on peut alors calculer la distance entre l'émetteur-récepteur et la cible.

[Math 1]

$$T = \frac{1}{f}$$

[Math 2]

$$2D = v * T$$

[Math 3]

$$D = \frac{v}{(2 * f)}$$

avec : - T le temps que met une onde pour faire un allé retour entre l'émetteur-récepteur et la cible (en s)

- f la fréquence du signal en sortie de mélangeur (en Hz)
- D la distance entre l'émetteur-récepteur et la cible (en m)
- v la vitesse de l'onde (en mm/s).

Le fait de connaître la hauteur d'un endroit permet d'avoir une mesure de stock disponible en calculant le volume de matière encore disponible à partir de la hauteur. Dans ce cas, le capteur de niveau est positionné en haut d'un contenant. Une autre application du système est la mesure de niveau d'eau pour la surveillance de crues, des inondations ou encore des déversoirs d'orages. Le capteur de niveau est alors placé en haut d'une canalisation.

L'installation d'une lentille dans le capteur de niveau va permettre une mesure plus précise et va permettre de mesurer des distances plus grandes comparer à un dispositif émetteur-récepteur sans lentille puisque le signal est focalisé.

L'information de la distance permet d'utiliser le capteur de niveau dans différentes applications et s'adapte en fonction de la tâche qui lui est confiée. Le capteur de niveau s'adapte aussi à différents paramètres tel que la distance, la taille de la surface à mesurer ou encore l'état de la surface. Ainsi pour la mesure de silo, on va privilégier un angle d'ouverture large permettant de couvrir une plus grande surface. Dans les silos la surface à mesurer est le plus souvent chaotique. Pour avoir une mesure qui se rapproche le plus de la réalité, on va appliquer un angle d'ouverture large. Celui-ci permettant de couvrir une plus grande surface et de mieux estimer le volume de matière présent dans le silo.

Pour la mesure de hauteur d'eau, le système va pouvoir s'adapter en fonction de l'écoulement qui nous donnera une surface plus ou moins chaotique. Ainsi si on retrouve des obstacles à l'écoulement dans une eau qui s'écoule rapidement, la surface ne va plus être plane mais chaotique et un angle d'ouverture large sera adapté. L'angle d'ouverture large permettra de mieux estimer la hauteur moyenne d'eau. Tandis que lorsque l'écoulement sera lent et sans obstacle, la surface sera lisse. Un angle d'ouverture faible est alors plus adapté car il permet d'avoir une mesure plus précise.

L'invention est avantageusement mise en oeuvre selon les modes de réalisation et les variantes exposées ci-après, lesquelles sont à considérer individuellement ou selon toute combinaison techniquement opérante.

Dans un mode de réalisation, l'élément de variation est un moteur relié au dispositif émetteur-récepteur et déplaçant ledit dispositif émetteur-récepteur suivant un axe, la lentille étant fixe.

Dans un mode de réalisation, l'élément de variation est un moteur relié à la lentille et déplaçant ladite lentille suivant un axe, le dispositif émetteur-récepteur étant fixe.

Dans un mode de réalisation, l'élément de variation est un moteur relié à la lentille et au dispositif émetteur-récepteur et déplaçant ladite lentille par rapport au dispositif émetteur-récepteur.

Dans un mode de réalisation, la lentille est composée de deux surfaces, une première surface orientée face au dispositif émetteur-récepteur et une deuxième surface orientée face à la cible, la première surface de la lentille ou la deuxième surface de la lentille ont une forme sélectionnée parmi les formes suivantes : concave, convexe, sphérique, plane et de Fresnel.

Dans un mode de réalisation, un caisson étanche rendant le capteur de niveau étanche à l'eau et l'humidité.

Dans un mode de réalisation, la lentille est composée d'un ou plusieurs matériaux ayant une permittivité relative comprise entre 1,5 et 15.

Dans un mode de réalisation, l'angle $\beta$ est compris entre 1 et 60°.

Dans un mode de réalisation, la carte électronique radar est configurée avec un écho de référence et adapte l'amplitude des ondes électromagnétiques émises, appelé signal, selon les conditions suivantes : envoi d'un premier signal d'envoi du dispositif émetteur-récepteur en mode émission ; réception du premier signal retour par le dispositif émetteur-récepteur en mode réception ; et comparaison du premier signal retour avec la valeur de l'écho de référence seulement si le premier signal de retour est au-delà d'une valeur de plus 10% ou moins 10% de la valeur de l'écho de référence alors envoi d'une deuxième amplitude du signal d'envoi du dispositif émetteur-récepteur selon les conditions suivantes pour que la valeur de la deuxième amplitude du signal d'envoi soit égale à :

- la valeur de l'amplitude du premier signal d'envoi plus une valeur comprise entre 1% et 10% de l'amplitude du premier signal d'envoi, si le premier signal retour est inférieur à 10% de l'écho de référence ;
- la valeur de l'amplitude du premier signal d'envoi moins une valeur comprise entre 1% et 10% de l'amplitude du premier signal d'envoi, si le premier signal retour est supérieur à 10% de l'écho de référence.

L'écho de référence est pré-enregistré. Selon un autre exemple, l'écho de référence est extrait d'un abaque.

Si le premier signal retour est dans la fourchette de référence plus 10% et moins 10% de l'écho de référence, alors l'amplitude des ondes électromagnétiques émises est la bonne.

Le dispositif possède une fonction de puissance adaptative qui permet de paramétrer au mieux la puissance d'émission afin d'obtenir un écho dont l'amplitude est adaptée à une analyse optimale (écho suffisamment fort pour analyse) ou de réduire la puissance d'émission si la cible est proche donc de gagner en autonomie énergétique. Le dispositif effectue une première mesure à une puissance prédéfinie, suivant l'amplitude de l'écho reçu, le dispositif adapte sa puissance d'émission, augmentation ou diminution.

La validité de l'amplitude de l'écho est définie par un seuil qui décroît linéairement avec la distance à la cible. En effet, à puissance d'émission égale, pour une même cible, l'amplitude de l'écho diminue avec la distance, ce phénomène est dû à l'atténuation des signaux avec la distance.

Concernant les tirs successifs et pour économiser l'énergie (consommée à chaque émission) et optimiser la qualité du résultat, le système peut s'expliquer comme cela : on fait un premier tir (un envoi et une réception) si les deux sont trop différents, alors on recommence autant de fois que nécessaire.

L'intérêt de ces tirs successifs est la variation de la puissance ou de la tension pour le tir radar, adapter la puissance lors des premiers tirs permet d'économiser de l'énergie et d'être plus précis sur les résultats.

Selon un deuxième aspect, la présente invention vise un procédé d'un capteur de niveau pour la mesure d'une distance entre un dispositif émetteur-récepteur et une cible, remarquable en ce qu'il comporte les étapes suivantes :

- émission d'ondes électromagnétiques par un dispositif émetteur-récepteur possédant un mode d'émission d'ondes électromagnétiques selon un angle $\alpha$ et un mode réception d'ondes électromagnétiques, appelé écho,
- positionnement d'une lentille entre le dispositif émetteur-récepteur et la cible selon une distance, ladite lentille déviant les ondes électromagnétiques du dispositif émetteur-récepteur selon l'angle $\alpha$ pour changer l'angle des ondes électromagnétiques selon un angle $\beta$ ;
- variation par un élément de variation modifiant la distance entre la lentille et le dispositif émetteur-récepteur ;
- commande par une carte électronique radar prévue pour piloter le dispositif émetteur-récepteur pour l'envoie d'ondes électromagnétiques et le traitement de l'écho reçu et le calcul d'une distance avec la cible, ledit calcul d'une distance entre l'émetteur-récepteur et la cible est effectué à partir de la vitesse de propagation de l'onde dans son milieu, la fréquence des ondes électromagnétiques et du temps de réponse entre le mode d'émission et le mode de réception ;
- communication par une carte de communication entre le capteur de niveau et un terminal pour transmettre l'information du calcul de la distance provenant de la carte électronique ;
- traitement de signal par une carte électronique radar configurée avec une amplitude maximale des ondes électromagnétiques, un écho de référence et le stockage d'une valeur d'amplitude sauvegardée égale à 50% de l'amplitude maximale des ondes électromagnétiques ; ladite la carte électronique radar adapte l'amplitude des ondes électromagnétiques émises, appelé signal, selon les sous étapes suivantes :

  - envoi d'un premier signal d'envoi du dispositif émetteur-récepteur en mode émission, la valeur de l'amplitude du premier signal d'envoi est égale à la valeur de l'amplitude sauvegardée ;
  - réception du premier signal retour par le dispositif émetteur-récepteur en mode réception ;
  - comparaison du premier signal retour avec la valeur de l'écho de référence, et seulement si le premier signal de retour est en dehors d'une fourchette de référence de plus 10% et moins 10% de la valeur de l'écho de référence alors envoi d'une deuxième amplitude du signal d'envoi du dispositif émetteur-récepteur, selon les conditions suivantes pour que la valeur de la deuxième amplitude du signal d'envoi soit égale à :

    - la valeur de l'amplitude du premier signal d'envoi plus une valeur comprise entre 1% et 10% de l'amplitude du premier signal d'envoi, si le premier signal retour est inférieur à 10% de l'écho de référence ;
    - la valeur de l'amplitude du premier signal d'envoi moins une valeur comprise entre 1% et 10% de l'amplitude du premier signal d'envoi, si le premier signal retour est supérieur à 10% de l'écho de référence ;

  - stockage de la valeur de la deuxième amplitude du signal d'envoi à la valeur d'amplitude sauvegardée ;
  - répétition des sous étapes tant que la valeur du premier signal retour ne soit pas comprise entre plus ou moins 10% de la valeur de l'écho de référence.

Les avantages, buts et caractéristiques particulières de ce procédé étant similaires à ceux du capteur de niveau objet de la présente invention, ils ne sont pas rappelés ici.

**Brève description des figures**

D'autres avantages, buts et caractéristiques de la présente invention ressortent de la description qui suit faite, dans un but explicatif et nullement limitatif, en regard des dessins annexés, dans lesquels :

[Fig. 1] la figure 1 (relative à l'art antérieur) représente un schéma de principe d'un dispositif émetteur-récepteur ;
[Fig. 2] la figure 2 représente un schéma de principe d'un dispositif émetteur-récepteur et d'une cible à surface chaotique ;
[Fig. 3] la figure 3 représente un schéma de principe d'un dispositif émetteur-récepteur et d'une cible à surface plane ;
[Fig. 4] la figure 4 représente un schéma de principe des différents éléments qui composent le capteur de niveau ;
[Fig. 5] la figure 5 représente un schéma pour expliquer l'amplitude du signal avec une cible petite.
[Fig. 6] la figure 6 représente un schéma pour expliquer l'amplitude du signal avec une cible grande.
[Fig. 7] la figure 7 représente un schéma pour expliquer la mesure avec des cibles parasites.
[Fig. 8] la figure 8 représente un schéma pour expliquer comment le capteur de niveau évite des cibles parasites.
[Fig. 9] la figure 9 représente des schémas de fonctionnement du capteur de niveau pour illustrer les données de la figure 10.
[Fig. 10] la figure 10 représente des données de mesure des schémas de la figure 9.
[Fig. 11] la figure 11 représente différente forme de lentille.

**Description des modes de réalisation**

La figure 1 représente a été décrit précédemment.

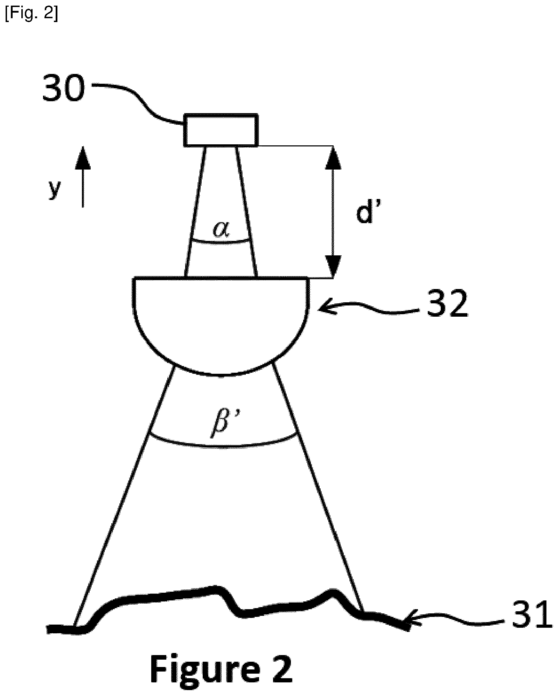

La figure 2 montre un schéma de principe d'un dispositif émetteur-récepteur et d'une cible avec une distance petite.

Entre le dispositif émetteur-récepteur 30 et d'une cible 31, il est placé une lentille 32 devant l'onde envoyée. La lentille 32 est faite en une matière qui permet à l'onde de la traverser.

La forme particulière de la lentille 32 permet de focaliser les ondes envoyées avec un angle α à un angle β. En faisant varier la distance entre le dispositif émetteur-récepteur 30 et la lentille 32, on peut modifier l'angle β. Plus le dispositif émetteur-récepteur 30 et la lentille 32 sont proches, c'est à dire plus la distance, notée d' sur la figure, va être petite, plus l'angle β' va être grand et va pouvoir couvrir une plus grande zone de détection.

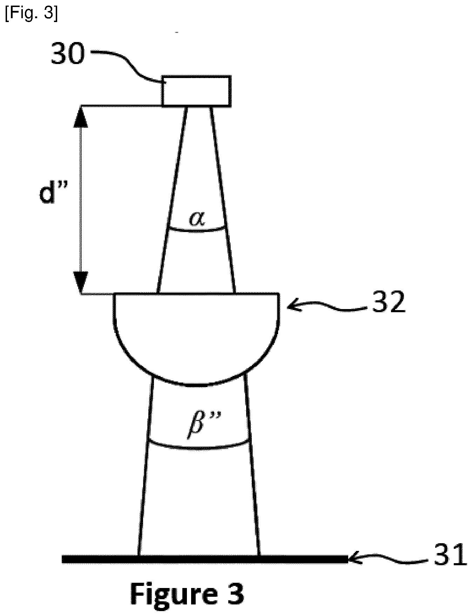

A l'inverse, sur la figure 3, plus la distance d" va être grande, plus l'angle β" va être petit.

La figure 3 reprend les éléments de la figure 2.

La variation de l'angle β permet de focaliser les ondes sur une zone bien spécifique afin de donner une mesure plus précise.

Pour une lentille 32 de forme plan-convexe cambrure négative et en faisant varier la distance d entre le dispositif émetteur-récepteur 30 et la lentille 32, on obtient un angle d'ouverture compris entre 8° et 20°.

L'angle d'ouverture peut varier plus avec une autre forme de lentille 32.

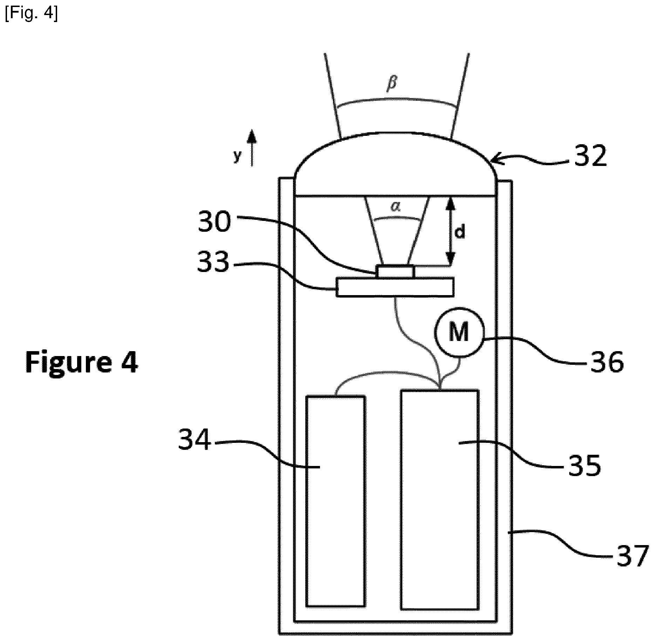

La figure 4 montre un schéma de principe des différents éléments qui composent le capteur de niveau.

Le capteur de niveau permet de mesurer une distance entre un dispositif émetteur-récepteur 30 et une cible 31. Le dispositif émetteur-récepteur 30 possède un mode d'émission d'ondes électromagnétiques et un mode réception d'ondes électromagnétiques.

Il est visible sur cette figure une lentille 32 positionné entre le dispositif émetteur-récepteur 30 et la cible 31.

Un élément de variation permet de faire varier la distance entre la lentille 32 et le dispositif émetteur-récepteur 30.

Exemple de l'élément de variation :

Dans un exemple, on fixe une roue dentée sur l'arbre de sortie d'un moteur. La roue dentée entraîne une crémaillère fixée au dispositif de l'émetteur-récepteur. La lentille est fixe. La rotation du moteur permet alors de faire varier la distance d entre l'émetteur-récepteur et la lentille.

Dans un autre exemple, on fixe une pièce filetée sur l'arbre de sortie d'un moteur. Cette pièce ne peut avoir qu'un mouvement de rotation. On fixe une pièce taraudée au dispositif de l'émetteur-récepteur. La rotation de la pièce taraudée est bloquée par rapport au bâti. La lentille est fixe. La rotation du moteur et de la pièce filetée dans la pièce taraudée entraîne la translation du dispositif de l'émetteur-récepteur. La rotation du moteur permet alors de faire varier la distance d entre l'émetteur-récepteur et la lentille.

Dans un autre exemple, on fixe une pièce filetée sur l'arbre de sortie d'un moteur. Cette pièce ne peut avoir qu'un mouvement de rotation. On fixe une pièce taraudée à la lentille. La rotation de la pièce taraudée est bloquée par rapport au bâti. Le dispositif de l'émetteur-récepteur est fixe. La rotation du moteur et de la pièce filetée dans la pièce taraudée entraîne la translation de la lentille. La rotation du moteur permet alors de faire varier la distance d entre l'émetteur-récepteur et la lentille.

Ces exemples sont ici à titre indicatif d'un fonctionnement. L'élément de variation a pour but de changer la distance entre l'émetteur-récepteur et la lentille.

Une carte électronique radar 33 est prévue pour commander le dispositif émetteur-récepteur 30 pour l'envoi d'ondes électromagnétiques et le traitement de signal reçu ainsi que le calcul d'une distance avec la cible 31.

Une carte de communication 34 entre le capteur de niveau et un terminal permet de transmettre l'information du calcul de la distance provenant de la carte électronique.

Une batterie 35 permet l'alimentation des différents éléments du capteur de niveau.

Le dispositif émetteur-récepteur 30 et la lentille 32 sont positionnés selon un même axe.

Par exemple, l'axe est un axe noté y, ledit axe est colinéaire à l'axe médian des ondes électromagnétiques.

Pour faire varier la distance d soit : - on déplace le dispositif émetteur-récepteur 30 suivant l'axe y à l'aide d'un moteur 36 tout en laissant la lentille 32 fixe ; - on déplace la lentille 32 suivant l'axe y à l'aide d'un moteur 36 tout en laissant le dispositif émetteur-récepteur 30 fixe ;

- on déplace simultanément le dispositif émetteur-récepteur 30 et la lentille 32.

Le dispositif émetteur-récepteur 30 est connecté à la carte électronique radar 33, cette dernière commande l'envoie du signal et traite le signal reçu pour calculer un niveau de matière. Une fois les données traitées, elles sont envoyées grâce à la carte électronique communicante à un terminal. L'utilisateur du terminal peut alors lire l'information.

On entend par terminal comme étant : une tablette numérique, un téléphone mobile, notamment de type « smartphone », une montre connectée, une télécommande, un ordinateur ou un superviseur.

La carte électronique radar 33 et la carte de communication 34 ainsi que le moteur 36 sont alimentés par une batterie 35. Cela permet d'avoir un système sans fil transportable. L'ensemble de ces éléments sont placés dans un caisson.

Le caisson 37 assure l'étanchéité à l'eau et aux poussières et protège le système des chocs.

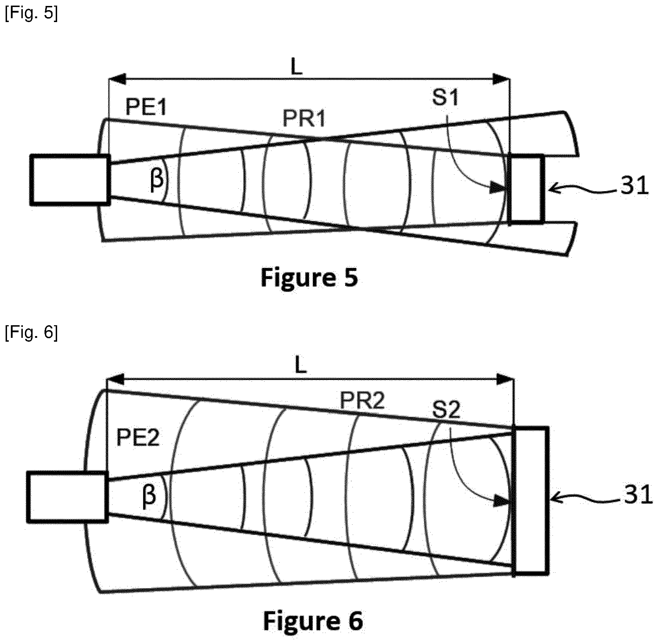

Les figures 5 et 6 représentent des schémas pour expliquer l'optimisation de l'amplitude du signal avec une cible 31 plus ou moins grande.

L'écho étant l'enveloppe du signal réfléchi par la cible. L'amplitude de l'écho, en dB, dépend principalement de la taille de la cible, ainsi que de la distance qui la sépare du dispositif émetteur-récepteur. Plus la cible va être éloignée, plus l'écho va être atténué. Afin de correctement détecter une cible, il faut que l'amplitude de l'écho soit suffisante pour ressortir du bruit. Le bruit étant le niveau de signal mesuré par le système en l'absence d'écho. Pour cela, il faut que l'amplitude soit supérieure à un seuil de détection minimal prédéterminé.

Si le capteur de niveau envoie un signal d'amplitude Pe1 sur une cible 31 de surface S1, l'écho de retour est d'une amplitude Pr1. L'amplitude Pr1 est supérieure au seuil de détection. Maintenant on envoie un signal d'amplitude Pe2 sur une cible 31 de surface S2 plus grande que S1. On garde la même distance L ainsi que le même angle β. La surface de la cible 31 étant plus grande, l'onde a plus de surface pour se réfléchir donc à signal d'amplitude émise égale sur les 2 surfaces, l'écho qui se réfléchit sur la plus grande surface est plus puissant. On fait en sorte d'envoyer une amplitude Pe2 inférieure à Pe1 afin d'avoir un écho Pr2 égal à Pr1. En envoyant le signal d'une amplitude Pe2 plus petite que Pe1, on réduit la consommation d'énergie du capteur de niveau et on augmente son autonomie en fonction de la nature de la cible 31. La carte électronique radar 33 permet de faire ce traitement.

Le capteur de niveau permet de s'adapter à de nouvelles applications et de proposer une solution pour des cas particuliers où des technologies classiques ne permettraient pas d'avoir une mesure précise. Ainsi elle peut s'adapter à une taille de contenant non standard. On adapte l'angle d'ouverture en fonction de l'environnement et de « la cible mesurée ».

Un utilisateur peut utiliser le même produit pour plusieurs applications, c'est un produit polyvalent.

Contrairement au capteur de niveau par ultrason, dans l'air, les ondes électromagnétiques se propagent à une vitesse variant très peu avec les conditions environnementales (Température, pression, flux d'air...). On peut alors négliger un écart de vitesse, nous donnant ainsi une mesure stable quelques soit la composition de l'air ou sa température. A partir du moment où la température ne vient pas dégrader le matériel lui-même. La mesure est alors plus fiable que celle fournie par un capteur ultrason. un capteur ultrason. Le capteur de niveau est donc installable dans des lieux où la température peut varier et est installable dans différentes régions du globe sans pour autant avoir à modifier le matériel.

Le capteur de niveau est mobile et léger et est facilement transportable à la main.

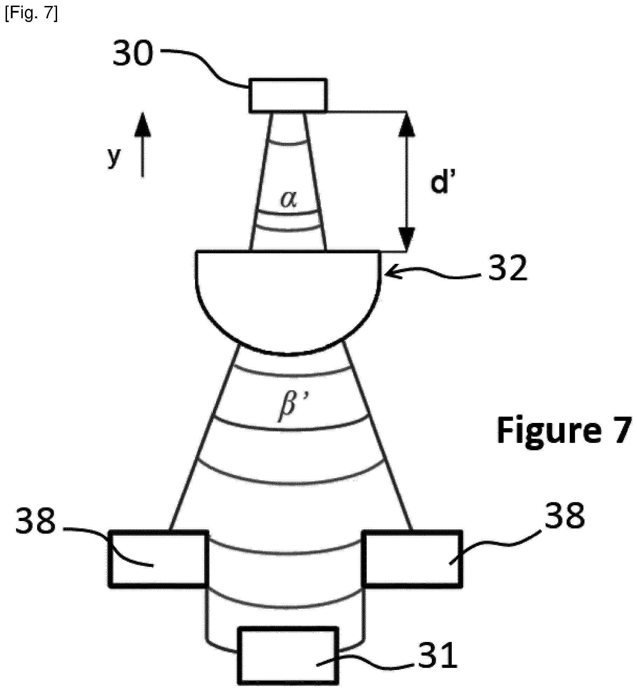

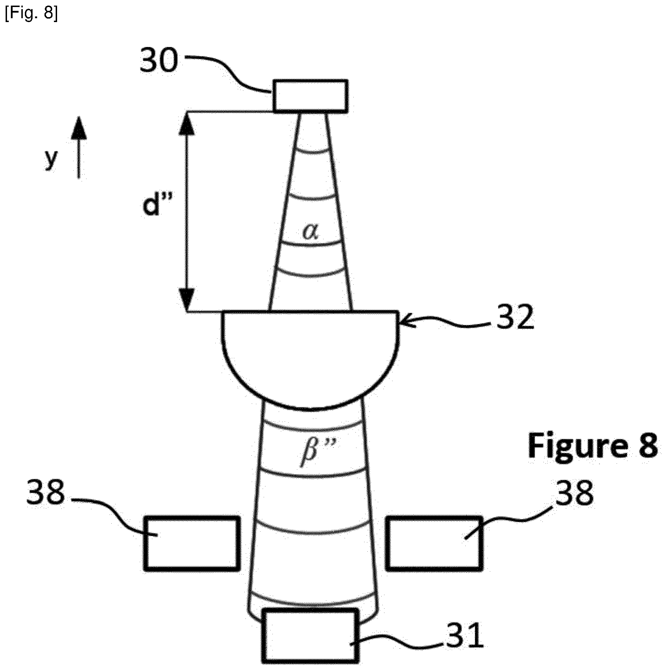

Les figures 7 et 8 représentent des schémas pour expliquer comment le capteur de niveau évite des cibles parasites 38.

La figure 7 montre des cibles parasites avec un angle β important. Le capteur de niveau peut faire un autofocus sur la cible à mesurer en évitant des cibles parasites 38.

La figure 8 montre que quand on cherche à mesurer la distance entre le dispositif émetteur-récepteur 30 et la cible 31, la fermeture de l'angle β permet d'éviter les cibles parasites 38.

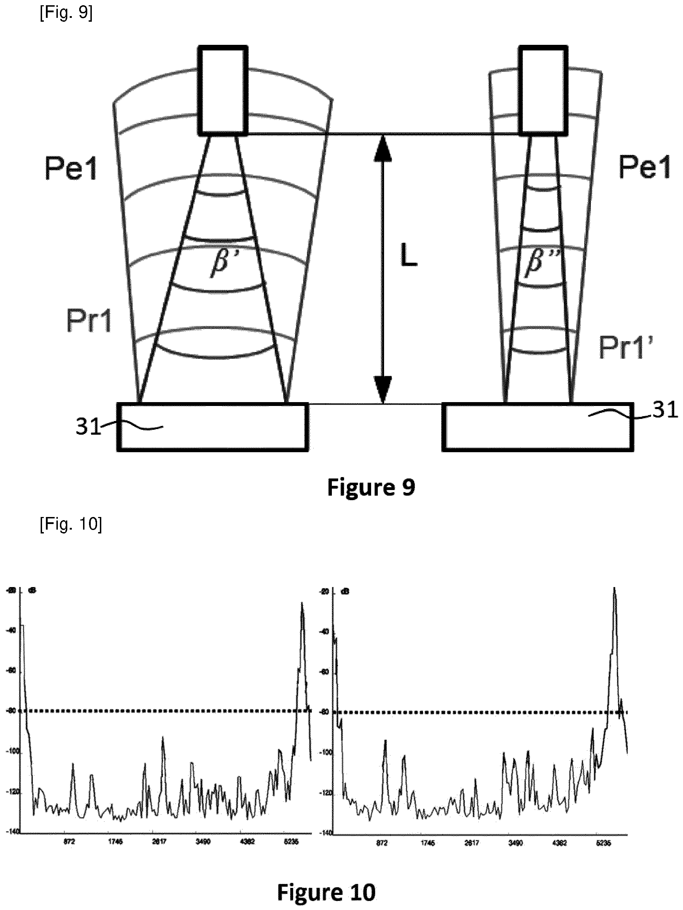

La figure 9 montre un schéma de fonctionnement du capteur de niveau pour illustrer les données de la figure 10. Dans cet exemple, le β' est égal à 20° et β" est égal 17°.

Les données relatives au β'=20° sont sur la gauche et les données relative au β"=17° sont sur la droite.

Le capteur de niveau envoie un signal d'une amplitude Pe1 sur une cible 31 de surface S située à une distance L. Le signal Pe1 étant constitué par des ondes électromagnétiques. La distance d' nous donne un angle d'ouverture β'. Pour que la mesure soit faite, l'amplitude du signal doit être supérieure à un seuil de détection prédéterminé.

Dans un exemple, le seuil de détection prédéterminé est fixé à -80dB.

Maintenant si on envoie un signal de la même amplitude Pe1 sur la même cible 31 avec la même surface S située à la même distance L mais qu'on remplace la distance d' par la distance d" supérieure à d'. L'angle d'ouverture β" est alors plus petit que β'. Le signal d'amplitude Pe1 est alors concentré sur une plus petite surface de détection. L'écho retour sera alors d'une amplitude Pr1' supérieure à Pr1.

La figure 10 montre des données de mesure des schémas de la figure 9 pour un exemple : détection d'une cible 31 à 6000mm du capteur de niveau.

La ligne en pointillé représente le seuil minimal de détection prédéterminé à -80dB.

Ici β'=20° et β"=17°. Sur la figure 10, les données relatives au β'=20° sont sur la gauche et les données relative au β"=17° sont sur la droite. Les données de cette figure sont relatives aux schémas respectifs de la figure 9. L'axe des ordonnées donne l'amplitude du signal en dB. L'axe des abscisses donne la distance calculée à partir de la mesure en mm.

On obtient un écho retour pour l'angle β' d'amplitude -25dB. On obtient un écho retour pour l'angle β" d'amplitude -15dB. Sachant qu'une différence de 3dB entre 2 échos retour, nous donne une amplitude environ 2 fois plus grande.

Ici en réduisant l'angle de 3°, on augmente l'amplitude de l'écho retour d'environ $2^{(25-15)/3}=10$ fois.

Maintenant si on envoie un signal d'une amplitude Pe2 suivant la même configuration de précédemment, c'est à dire avec la même cible 31, la même surface S, la même distance d"et le même angle d'ouverture β". On fait en sorte d'envoyer un signal d'amplitude Pe2 inférieure à Pe1 afin d'avoir un écho d'amplitude Pr2 égal à Pr1, sachant que Pr1 est supérieur au seuil de détection prédéterminé.

En envoyant le signal d'une amplitude Pe2 plus petite que Pe1, on réduit la consommation en énergie de la présente invention et on augmente son autonomie.

En reprenant l'exemple au-dessus, on envoie une amplitude Pe2=Pe1/10. Pr2 sera alors égal à Pr1 et on aura réduit l'énergie nécessaire pour envoie le signal d'envoi par 10. Ce qui aura pour effet de réduire la consommation du capteur de niveau et d'augmenter son autonomie.

Contrôler l'angle d'ouverture β en faisant varier mécaniquement la distance d permet alors de réduire la consommation et augmenter l'autonomie du capteur de niveau en fonction de l'application.

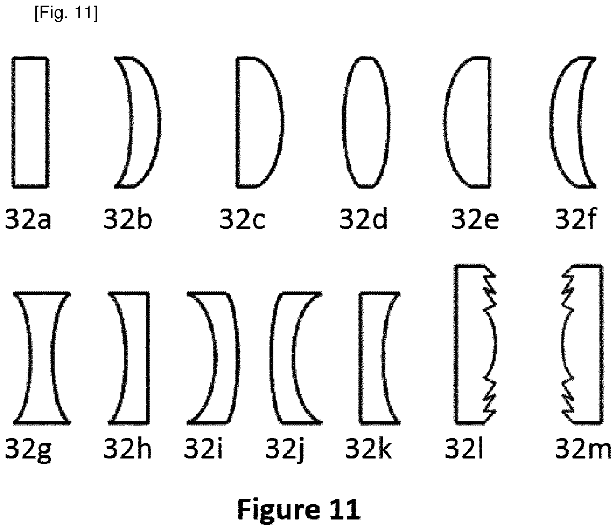

La figure 11 représente différentes formes de lentille 32.

La forme de la lentille peut être 32a plan-plan, 32b ménisque convergent cambrure négative, 32c plan convexe cambrure négative , 32d équiconvexe cambrure nulle , 32e plan convexe cambrure positive, 32f ménisque convergent cambrure positive, 32g équiconcave cambrure nul, 32h lentille plan concave cambrure négative, 32i ménisque divergent cambrure négative, 32j ménisque divergent cambrure négative, 32k plan concave cambrure positive, 321 fresnel cambrure négative , 32m fresnel cambrure positive.

On entend par lentille de Fresnel, une lentille plan-convexe découpée de sections annulaires concentriques optimisées pour alléger l'élément.

La lentille est composée d'un ou plusieurs matériaux ayant une permittivité relative comprise entre 1,5 et 15.

La lentille donne un angle β compris entre 1 et 60°.

## LISTE DES SIGNES DE RÉFÉRENCE

[Table 1]

| Références | Désignations |
|---|---|
| 30 | dispositif émetteur-récepteur |
| 31 | cible |
| 32 | lentille |
| 33 | carte électronique radar |
| 34 | carte de communication |
| 35 | batterie |
| 36 | moteur |
| 37 | caisson |
| 38 | cibles parasites |

[Table 2]

| Références | Désignations |
|---|---|
| A | Sens des ondes émises |
| B | Sens des ondes réfléchies |
| d, d', d" | distance entre le dispositif émetteur-récepteur et la lentille |
| L | distance entre le dispositif émetteur-récepteur et la cible |
| y | direction de la variation de la distance d |

**Revendications**

1. Capteur de niveau pour la mesure d'une distance entre un dispositif émetteur-récepteur (30) et une cible (31), le dispositif émetteur-récepteur (30) possédant :

   - un mode d'émission d'un signal d'envoi formé d'ondes électromagnétiques selon un angle $\alpha$ et
   - un mode réception d'ondes électromagnétiques formant un signal retour, appelé écho,

   **caractérisé en ce qu'**il comporte :

   - une lentille (32) positionnée entre le dispositif émetteur-récepteur (30) et la cible (31) selon une distance, ladite lentille (32) déviant les ondes électromagnétiques émises par le dispositif émetteur-récepteur (30) selon l'angle $\alpha$ pour changer l'angle des ondes électromagnétiques selon un angle $\beta$,
   - une carte électronique radar (33) prévue pour piloter le dispositif émetteur-récepteur (30) pour l'envoi d'ondes électromagnétiques et le traitement de l'écho reçu et pour calculer la distance avec la cible (31) à partir de la vitesse de propagation de l'onde dans son milieu, de la fréquence des ondes électromagnétiques et du temps de réponse entre l'émission du signal d'envoi et la réception de l'écho,

   la carte électronique radar (33) étant configurée pour adapter l'amplitude des ondes électromagnétiques émises afin que l'amplitude de l'écho reçu soit dans une fourchette de référence de plus 10% et moins 10% de l'amplitude d'un écho de référence, ledit écho de référence étant préenregistré ou extrait d'un abaque, avec une réalisation de tirs successifs et une comparaison entre les échos des tirs successifs et celui de référence .

2. Capteur de niveau selon la revendication 1, comportant de plus un élément de variation de la distance entre la lentille (32) et le dispositif émetteur-récepteur (30).

3. Capteur de niveau selon la revendication 2, dans lequel l'élément de variation est un moteur (36) relié au dispositif émetteur-récepteur (30) et déplaçant ledit dispositif émetteur-récepteur (30) suivant un axe, la lentille (32) étant fixe.

4. Capteur de niveau selon la revendication 2, dans lequel l'élément de variation est un moteur (36) relié à la lentille (32) et déplaçant ladite lentille (32) suivant un axe, le dispositif émetteur-récepteur (30) étant fixe.

5. Capteur de niveau selon la revendication 2, dans lequel l'élément de variation est un moteur (36) relié à la lentille (32) et au dispositif émetteur-récepteur (30) et déplaçant ladite lentille (32) par rapport au dispositif émetteur-récepteur (30).

6. Capteur de niveau selon la revendication 1, dans lequel la lentille (32) est composée de deux surfaces, une première surface orientée face à dispositif émetteur-récepteur (30) et une deuxième surface orientée face à la cible (31), la première surface de la lentille (32) ou la deuxième surface de la lentille (32) étant une forme sélectionnée parmi les formes suivantes : concave, convexe, sphérique, plane et de Fresnel.

7. Capteur de niveau selon la revendication 1, dans lequel un caisson étanche (37) rend le capteur de niveau étanche à l'eau et l'humidité.

8. Capteur de niveau selon la revendication 1, dans lequel la lentille (32) est composée d'un ou plusieurs matériaux ayant une permittivité relative comprise entre 1,5 et 15.

9. Capteur de niveau selon la revendication 1, dans lequel l'angle $\beta$ est compris entre 1 et 60° .

10. Capteur de niveau selon la revendication 1, dans lequel la carte électronique radar (33) est configurée pour adapter l'amplitude des ondes électromagnétiques émises selon les conditions suivantes : envoi d'un premier signal d'envoi (Pe1) du dispositif émetteur-récepteur (30) en mode émission ; réception du premier signal retour (Pr1) par le dispositif émetteur-récepteur (30) en mode réception ; et comparaison de l'amplitude du premier signal retour (Pr1) avec la valeur de l'amplitude de l'écho de référence, et, seulement si l'amplitude du premier signal de retour (Pr1) est en dehors de la fourchette de référence de plus 10% et moins 10% de la valeur de l'amplitude de l'écho de référence, alors envoi d'un deuxième signal d'envoi (Pe2) du dispositif émetteur-récepteur (30) selon les conditions suivantes pour que la valeur d'amplitude du deuxième signal d'envoi (Pe2) soit égale à:

- la valeur de l'amplitude du premier signal d'envoi (Pe1) plus une valeur comprise entre 1% et 10% de l'amplitude du premier signal d'envoi (Pe1), si l'amplitude du premier signal retour (Pr1) est inférieure à 10% de l'amplitude de l'écho de référence,
- la valeur de l'amplitude du premier signal d'envoi (Pe1) moins une valeur comprise entre 1% et 10% de l'amplitude du premier signal d'envoi (Pe1), si l'amplitude du premier signal retour (Pr1) est supérieure à 10% de l'amplitude de l'écho de référence.

**11.** Capteur de niveau selon la revendication 1, comportant de plus

- une carte de communication (34) entre le capteur de niveau et un terminal pour transmettre l'information du calcul de la distance provenant de la carte électronique,
- une batterie (35) pour alimenter les différents éléments du capteur de niveau.

**12.** Procédé capteur de niveau pour la mesure d'une distance entre un dispositif émetteur-récepteur (30) et une cible (31), **caractérisé en ce qu'**il comporte les étapes suivantes :

- émission d'un signal d'envoi formé d'ondes électromagnétiques selon un angle $\alpha$ et réception par le dispositif émetteur-récepteur (30) d'ondes électromagnétiques formant un signal retour, appelé écho,
- positionnement d'une lentille (32) entre le dispositif émetteur-récepteur (30) et la cible (31) selon une distance, ladite lentille (32) déviant les ondes électromagnétiques émises par le dispositif émetteur-récepteur (30) selon l'angle $\alpha$ pour changer l'angle des ondes électromagnétiques selon un angle $\beta$ ;
- traitement de l'écho reçu pour calculer la distance avec la cible (31) à partir de la vitesse de propagation de l'onde dans son milieu, de la fréquence des ondes électromagnétiques et du temps de réponse entre l'émission du signal d'envoi et la réception de l'écho ;
- stockage d'une valeur d'amplitude sauvegardée égale à 50% de l'amplitude maximale des ondes électromagnétiques ;
- adaptation de l'amplitude des ondes électromagnétiques émises selon les sous étapes suivantes :

  - envoi d'un premier signal d'envoi (Pe1) du dispositif émetteur-récepteur (30) en mode émission, la valeur de l'amplitude du premier signal d'envoi (Pe1) étant égale à la valeur d'amplitude sauvegardée ;
  - réception du premier signal retour (Pr1) par le dispositif émetteur-récepteur (30) en mode réception ;
  - comparaison du premier signal retour (Pr1) avec l'amplitude d'un écho de référence, et, seulement si l'amplitude du premier signal de retour (Pr1) est en dehors d'une fourchette de référence de plus 10% et moins 10% de la valeur de l'amplitude de l'écho de référence, alors envoi d'un deuxième signal d'envoi (Pe2) du dispositif émetteur-récepteur (30), selon les conditions suivantes pour que la valeur de l'amplitude du deuxième signal d'envoi (Pe2) soit égale à:

    - la valeur de l'amplitude du premier signal d'envoi (Pe1) plus une valeur comprise entre 1% et 10% de l'amplitude du premier signal d'envoi (Pe1), si l'amplitude du premier signal retour (Pr1) est inférieure à 10% de l'amplitude de l'écho de référence,
    - la valeur de l'amplitude du premier signal d'envoi (Pe1) moins une valeur comprise entre 1% et 10% de l'amplitude du premier signal d'envoi (Pe1), si l'amplitude du premier signal retour (Pr1) est supérieure à 10% de l'amplitude de l'écho de référence ;
    - stockage de la valeur de l'amplitude du deuxième signal d'envoi (Pe2) en tant que valeur d'amplitude sauvegardée ;
    - répétition des sous étapes tant que la valeur du premier signal retour n'est pas comprise dans la fourchette de référence de plus 10% et moins 10% de la valeur de l'écho de référence.

**13.** Procédé capteur de niveau selon la revendication 12 comportant en outre une variation de la distance entre la lentille (32) et le dispositif émetteur-récepteur (30).

**14.** Procédé capteur de niveau selon la revendication 12 ou la revendication 13 comportant en outre une communication par une carte de communication (34) entre le capteur de niveau et un terminal pour transmettre l'information du calcul de la distance provenant de la carte électronique.

**Patentansprüche**

1. Füllstandsensor für das Messen eines Abstands zwischen einer Sende-/Empfangsvorrichtung (30) und einem Ziel (31), wobei die Sende-/Empfangsvorrichtung (30)

   - einen Modus zum Aussenden eines aus elektromagnetischen Wellen gebildeten Sendesignals unter einem Winkel $\alpha$ und
   - einen Modus zum Empfangen von ein als Echo bezeichnetes Antwortsignal bildenden elektromagnetischen Wellen

   aufweist,
   **dadurch gekennzeichnet, daß** er

   - eine zwischen der Sende-/Empfangsvorrichtung (30) und dem Ziel (31) in einem Abstand angeordnete Linse (32), wobei die Linse (32) die von der Sende-/Empfangsvorrichtung (30) unter dem Winkel $\alpha$ ausgesandten elektromagnetischen Wellen umleitet, um den Winkel der elektromagnetischen Wellen in einen Winkel $\beta$ zu ändern,
   - eine elektronische Radarkarte (33), die dazu ausgelegt ist, die Sende-/Empfangsvorrichtung (30) zum Aussenden der elektromagnetischen Wellen und zum Verarbeiten des empfangenen Echos und zum Berechnen des Abstands zum Ziel (31) aus der Ausbreitungsgeschwindigkeit der Welle in ihrer Umgebung, der Frequenz der elektromagnetischen Wellen und der Zeit für die Antwort vom Aussenden des Sendesignals bis zum Empfang des Echos zu steuern,

   aufweist,
   wobei die elektronische Radarkarte (33) dazu ausgelegt ist, die Amplitude der ausgesandten elektromagnetischen Wellen mit einer Durchführung von mehreren aufeinanderfolgenden Aussendungen und einem Vergleich zwischen den Echos der aufeinanderfolgenden Aussendungen und dem Bezugsecho anzupassen, damit die Amplitude des empfangenen Echos in einem Bezugsbereich von plus 10 % bis minus 10 % der Amplitude eines Bezugsechos liegt, wobei das Bezugsecho im Voraus eingespeichert ist oder einem Diagramm entnommen ist.

2. Füllstandsensor gemäß Anspruch 1, der außerdem mindestens ein Element zum Verändern des Abstands zwischen der Linse (32) und der Sende-/Empfangsvorrichtung (30) aufweist.

3. Füllstandsensor gemäß Anspruch 2, bei dem das Element zum Verändern ein Motor (36) ist, der mit der Sende-/Empfangsvorrichtung (30) verbunden ist und die Sende-/Empfangsvorrichtung (30) entlang einer Achse bewegt, wobei die Linse (32) fest steht.

4. Füllstandsensor gemäß Anspruch 2, bei dem das Element zum Verändern ein mit der Linse (32) verbundener und die Linse (32) entlang einer Achse bewegender Motor (36) ist, wobei die Sende-/Empfangsvorrichtung (30) fest steht.

5. Füllstandsensor gemäß Anspruch 2, bei dem das Element zum Verändern ein mit der Linse (32) und der Sende-/Empfangsvorrichtung (30) verbundener und die Linse (36) gegenüber der Sende-/Empfangsvorrichtung (30) bewegender Motor (36) ist.

6. Füllstandsensor gemäß Anspruch 1, bei dem die Linse (32) aus zwei Oberflächen, einer zur Sende-/Empfangsvorrichtung (30) hin gerichteten ersten Oberfläche und einer zum Ziel (31) hin gerichteten zweiten Oberfläche, besteht, wobei die erste Oberfläche der Linse (32) oder die zweite Oberfläche der Linse (32) eine unter folgenden Formen ausgewählte Form hat : konkav, konvex, sphärisch, plan und fresnellinsenförmig.

7. Füllstandsensor gemäß Anspruch 1, bei dem ein dichter Kasten (37) den Füllstandsensor wasserdicht und feuchtigkeitsdicht macht.

8. Füllstandsensor gemäß Anspruch 1, bei dem die Linse (32) aus einem oder mehreren Materialien besteht, die eine relative Dielektrizitätskonstante zwischen 1,5 und 15 aufweisen.

9. Füllstandsensor gemäß Anspruch 1, bei dem der Winkel $\beta$ zwischen 1° und 60° beträgt.

10. Füllstandsensor gemäß Anspruch 1, bei dem die elektronische Radarkarte (33) dazu ausgelegt ist, die Amplitude der ausgesandten elektromagnetischen Wellen unter den folgenden Bedingungen anzupassen: Aussenden eines ersten Sendesignals (Pe1) der Sende-/Empfangsvorrichtung (30) im Sendemodus, Empfangen des ersten Antwortsignals (Pr1) durch die Sende-/Empfangsvorrichtung (30) im Empfangsmodus; und Vergleichen der Amplitude des ersten Antwortsignals (Pr1) mit dem Wert der Amplitude des Bezugsechos; und, nur wenn die Amplitude des ersten Antwortsignals (Pr1) außerhalb des Referenzwertebereichs von plus 10% bis minus 10% des Wertes der Amplitude des Referenzechos liegt, Aussenden eines zweiten Sendesignals (Pe2) der Sende-/Empfangsvorrichtung (30) unter den folgenden Bedingungen, damit der Wert der Amplitude des zweiten Sendesignals (Pe2) gleich

- dem Wert der Amplitude des ersten Sendesignals (Pe1) plus einem Wert, der zwischen 1 % und 10 % der Amplitude des ersten Sendesignals (Pe1) liegt, wenn die Amplitude des ersten Antwortsignals (Pr1) weniger als 10 % der Amplitude des Bezugsechos beträgt,
- dem Wert der Amplitude des ersten Sendesignals (Pe1) minus einem Wert, der zwischen 1 % und 10 % der Amplitude des ersten Sendesignals (Pe1) liegt, wenn die Amplitude des ersten Antwortsignals (Pr1) mehr als 10 % der Amplitude des Bezugsechos beträgt,

ist.

11. Füllstandsensor gemäß Anspruch 1, der außerdem

- eine Karte (34) für die Kommunikation zwischen dem Füllstandsensor und einem Terminal zum Übertragen der von der elektronischen Karte kommenden Information der Abstandsberechnung,
- eine Batterie (35) zum Speisen der verschiedenen Elemente des Füllstandsensors aufweist.

12. Füllstandsensorverfahren für das Messen eines Abstands zwischen einer Sende-/Empfangsvorrichtung (30) und einem Ziel (31), **dadurch gekennzeichnet, daß** es die folgenden Schritte aufweist:

- Aussenden eines aus elektromagnetischen Wellen gebildeten Sendesignals unter einem Winkel α und Empfangen von ein als Echo bezeichnetes Antwortsignal bildenden elektromagnetischen Wellen durch die Sende-/Empfangsvorrichtung (30),
- Positionieren einer Linse (32) zwischen der Sende-/Empfangsvorrichtung (30) und dem Ziel (31) in einer Entfernung, wobei die Linse (32) die von der Sende-/Empfangsvorrichtung (30) unter einem Winkel α ausgesandten elektromagnetischen Wellen umleitet, um den Winkel der elektromagnetischen Wellen in einen Winkel β zu ändern,
- Bearbeiten des empfangenen Echos, um den Abstand zum Ziel (31) von der Ausbreitungsgeschwindigkeit der Welle in ihrer Umgebung, der Frequenz der elektromagnetischen Wellen und der Antwortzeit zwischen dem Aussenden des Sendesignals und dem Empfang des Echos ausgehend zu berechnen,
- Speichern eines festgehaltenen Amplitudenwerts, der 50 % der maximalen Amplitude der elektromagnetischen Wellen beträgt,
- Anpassen der Amplitude der ausgesandten elektromagnetischen Wellen in den folgenden Unterschritten:
- Aussenden eines ersten Sendesignals (Pe1) der Sende-/Empfangsvorrichtung (30) im Sendemodus, wobei der Wert der Amplitude des ersten Sendesignals (Pe1) gleich dem Wert der festgehaltenen Amplitude ist,
- Empfangen des ersten Antwortsignals (Pr1) durch die Sende-/Empfangsvorrichtung (30) im Empfangsmodus;
- Vergleichen des ersten Antwortsignals (Pr1) mit der Amplitude eines Bezugsechos; und, nur wenn die Amplitude des ersten Antwortsignals (Pr1) außerhalb eines Referenzwertebereichs von plus 10 % bis minus 10 % des Wertes der Amplitude des Referenzechos liegt, Aussenden eines zweiten Sendesignals (Pe2) der Sende-/Empfangsvorrichtung (30) unter den folgenden Bedingungen, damit der Wert der Amplitude des zweiten Sendesignals (Pe2) gleich
- dem Wert der Amplitude des ersten Sendesignals (Pe1) plus einem Wert, der zwischen 1 % und 10 % der Amplitude des ersten Sendesignals (Pe1) liegt, wenn die Amplitude des ersten Antwortsignals (Pr1) weniger als 10 % der Amplitude des Bezugsechos beträgt,
- dem Wert der Amplitude des ersten Sendesignals (Pe1) minus einem Wert, der zwischen 1 % und 10 % der Amplitude des ersten Sendesignals (Pe1) liegt, wenn die Amplitude des ersten Antwortsignals (Pr1) mehr als 10 % der Amplitude des Bezugsechos beträgt,
ist,
- Speichern des Werts der Amplitude des zweiten Sendesignals (Pe2) als Wert der festgehaltenen Amplitude;
- Wiederholen der Unterschritte, solange der Wert des ersten Antwortsignals nicht im Referenzwertebereichs von plus 10 % bis minus 10 % des Wertes der Amplitude des Referenzechos liegt.

13. Füllstandsensorverfahren gemäß Anspruch 12, das außerdem eine Variation des Abstands zwischen der Linse (32) und der Sende-/Empfangsvorrichtung (30) aufweist.

14. Füllstandsensorverfahren gemäß Anspruch 12 oder Anspruch 13, das außerdem eine Kommunikation mittels einer Kommunikationskarte (34) zwischen dem Füllstandsensor und einem Terminal zum Übertragen der von der elektronischen Karte kommenden Information der Abstandsberechnung aufweist.

**Claims**

1. A level sensor for measuring a distance between a transmitter-receiver device (30) and a target (31), the transmitter-receiver device (30) having:

   - a transmission mode for transmitting a sending signal formed of electromagnetic waves at an angle α and
   - a reception mode for receiving electromagnetic waves forming a return signal, called echo, **characterized in that** it includes:
   - a lens (32) positioned between the transmitter-receiver device (30) and the target (31) at a distance, said lens (32) deflecting the electromagnetic waves transmitted by the transmitter-receiver device (30) at the angle α to change the angle of the electromagnetic waves to an angle β,
   - an electronic radar board (33) provided to pilot the transmitter-receiver device (30) for sending electromagnetic waves and processing the received echo and to calculate the distance with the target (31) based on the speed of propagation of the wave in its environment, the frequency of the electromagnetic waves and the response time between transmitting the sending signal and receiving the echo,

   the electronic radar board (33) being configured to adapt the amplitude of the electromagnetic waves transmitted so that the amplitude of the echo received is within a reference range of plus 10% and minus 10% of the amplitude of a reference echo, said reference echo being prerecorded or extracted from an abacus, with successive shots being performed and a comparison between the echoes of successive shots and the reference one.

2. The level sensor according to claim 1, further comprising an element for varying the distance between the lens (32) and the transmitter-receiver device (30).

3. The level sensor according to claim 2, wherein the variation element is a motor (36) connected to the transmitter-receiver device (30) and moving said transmitter-receiver device (30) along an axis, the lens (32) being fixed.

4. The level sensor according to claim 2, wherein the variation element is a motor (36) connected to the lens (32) and moving said lens (32) along an axis, the transmitter-receiver device (30) being fixed.

5. The level sensor according to claim 2, wherein the variation element is a motor (36) connected to the lens (32) and to the transmitter-receiver device (30) and moving said lens (32) relative to the transmitter-receiver device (30).

6. The level sensor according to claim 1, wherein the lens (32) is composed of two surfaces, a first surface facing the transmitter-receiver device (30) and a second surface facing the target (31), the first surface of the lens (32) or the second surface of the lens (32) having a shape selected among the following shapes: concave, convex, spherical, flat or Fresnel.

7. The level sensor according to claim 1, wherein a watertight casing (37) seals the level sensor against water and humidity.

8. The level sensor according to claim 1, wherein the lens (32) is composed of one or more materials having a relative permittivity between 1.5 and 15.

9. The level sensor according to claim 1, wherein the angle β is between 1 and 60°.

10. The level sensor according to claim 1, wherein the electronic radar board (33) is configured to adapt the amplitude of the electromagnetic waves transmitted according to the following conditions: sending a first sending signal (Pe1) of the transmitter-receiver device (30) in transmission mode; receiving the first return signal (Pr1) by the transmitter-receiver device (30) in reception mode; and comparing the amplitude of the first return signal (Pr1) with the amplitude value of the reference echo, and, only if the amplitude of the first return signal (Pr1) is out of the reference range of plus 10% and minus 10% of the reference echo amplitude value, then sending a second sending signal (Pe2) of the transmitter-receiver device (30) according to the following conditions so that the amplitude value of the second sending signal (Pe2) is equal to:

- the amplitude value of the first sending signal (Pe1) plus a value between 1% and 10% of the amplitude of the first sending signal (Pe1), if the amplitude of the first return signal (Pr1) is lower than 10% of the reference echo amplitude,
- the amplitude value of the first sending signal (Pe1) minus a value between 1% and 10% of the amplitude of the first sending signal (Pe1), if the amplitude of the first return signal (Pr1) is higher than 10% of the reference echo amplitude.

11. The level sensor according to claim 1, further comprising

- a communication board (34) between the level sensor and a terminal to transmit the distance calculation information coming from the electronic board,
- a battery (35) to power supply the different elements of the level sensor.

12. A level sensor method for measuring a distance between a transmitter-receiver device (30) and a target (31), **characterized in that** it includes the following steps:

- transmitting a sending signal formed of electromagnetic waves at an angle $\alpha$ and receiving, by the transmitter-receiver device (30), electromagnetic waves forming a return signal, called echo;
- positioning a lens (32) between the transmitter-receiver device (30) and the target (31) at a distance, said lens (32) deflecting the electromagnetic waves transmitted by the transmitter-receiver device (30) at the angle $\alpha$ to change the angle of the electromagnetic waves to an angle P;
- processing the received echo to calculate the distance with the target (31) based on the speed of propagation of the wave in its environment, the frequency of the electromagnetic waves and the response time between transmitting the sending signal and receiving the echo;
- storing a saved amplitude value equal to 50 % of the maximum amplitude of the electromagnetic waves;
- adapting the amplitude of the transmitted electromagnetic waves according to the following sub-steps:

  - sending a first sending signal (Pe1) of the transmitter-receiver device (30) in transmission mode, the amplitude value of the first sending signal (Pe1) being equal to the saved amplitude value;
  - receiving the first return signal (Pr1) by the transmitter-receiver device (30) in reception mode;
  - comparing the first return signal (Pr1) with the amplitude of a reference echo, and, only if the amplitude of the first return signal (Pr1) is out of a reference range of plus 10% and minus 10% of the reference echo amplitude value, then sending a second sending signal (Pe2) of the transmitter-receiver device (30), according to the following conditions so that the amplitude value of the second sending signal (Pe2) is equal to:

    - the amplitude value of the first sending signal (Pe1) plus a value between 1% and 10% of the amplitude of the first sending signal (Pe1), if the amplitude of the first return signal (Pr1) is lower than 10% of the reference echo amplitude,
    - the amplitude value of the first sending signal (Pe1) minus a value between 1% and 10% of the amplitude of the first sending signal (Pe1), if the amplitude of the first return signal (Pr1) is higher than 10% of the reference echo amplitude;
    - storing the amplitude value of the second sending signal (Pe2) as a saved amplitude value;
    - repeating the sub-steps as long as the value of the first return signal is not included in the reference range of plus 10% and minus 10% of the value of the reference echo.

13. The level sensor method according to claim 12, further comprising a variation of the distance between the lens (32) and the transmitter-receiver device (30).

14. The level sensor method according to claim 12 or claim 13, further including a communication by a communication board (34) between the level sensor and a terminal to transmit the distance calculation information coming from the electronic board.

[Fig. 1]

**Figure 1**

Art antérieur

[Fig. 2]

**Figure 2**

**Figure 3**

[Fig. 4]

**Figure 4**

[Fig. 5]

**Figure 5**

[Fig. 6]

**Figure 6**

[Fig. 7]

Figure 7

[Fig. 8]

Figure 8

[Fig. 9]

**Figure 9**

[Fig. 10]

**Figure 10**

[Fig. 11]

Figure 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019316951 A
- CN 108225482